(19) Europäisches Patentamt

European Patent Office

Office européen des brevets

(11) **EP 0 848 974 B2**

(12) **NEW EUROPEAN PATENT SPECIFICATION**

After opposition procedure

(45) Date of publication and mention
of the opposition decision:
**15.12.2010 Bulletin 2010/50**

(45) Mention of the grant of the patent:
**12.10.2005 Bulletin 2005/41**

(21) Application number: **97121495.2**

(22) Date of filing: **06.12.1997**

(51) Int Cl.:
*B01D 3/26* (2006.01)          *B01D 3/20* (2006.01)
*C10G 49/00* (2006.01)        *B01D 3/32* (2006.01)

(54) **Two-Phase downflow liquid distribution device**

Flüssigkeitsverteiler für Abwärtsströmung zweier Phasen

Dispositif de distribution de deux phases à courant descendant

(84) Designated Contracting States:
**BE CH DE DK ES FI FR GB IT LI NL SE**

(30) Priority: **19.12.1996 US 33501 P**

(43) Date of publication of application:
**24.06.1998 Bulletin 1998/26**

(73) Proprietor: **Haldor Topsoe A/S
2800 Lyngby (DK)**

(72) Inventors:
• **Gamborg, Morten Müller
3480 Fredensborg (DK)**
• **Jensen, Benny Normann
3520 Farum (DK)**

(74) Representative: **Grünecker, Kinkeldey,
Stockmair & Schwanhäusser
Anwaltssozietät
Leopoldstrasse 4
80802 München (DE)**

(56) References cited:
**US-A- 3 218 249      US-A- 3 914 352
US-A- 4 126 540      US-A- 4 510 023
US-A- 5 158 714      US-A- 5 265 428**

Remarks:
The file contains technical information submitted after
the application was filed and not included in this
specification

EP 0 848 974 B2

**Description**

**BACKGROUND OF THE INVENTION**

The present invention concerns a liquid distribution tray device that improves liquid distribution over the cross sectional area of a vessel following the tray. The device also intimately contacts the liquid and vapour. phases to achieve thermal and compositional equilibrium. The device is typically used in a hydroprocessing reactor.

Most of the known designs of liquid distribution devices fall into one of four categories. The first is a series of troughs and overflow weirs to systematically subdivide the liquid into multiple streams before it contacts the bed. This type is often used in liquid contactors or countercurrent absorbers. An example of this type is described in U.S. Patent No. 5,192,465.

A second type of liquid distribution device is a perforated horizontal tray. This may or may not have notched weirs around the perforations. The tray may also have chimneys for vapour flow. This type of distribution device can be used for rough liquid distribution in conjunction with a more sophisticated final liquid distribution tray. Examples of this type are disclosed in U.S. Patent No. 4,836,989.

The third common type of liquid distribution device is a chimney tray. This device uses a number of standpipes laid out typically on a regular square or triangular pitch pattern on a horizontal tray. The standpipes typically have holes in the sides for the passage of liquid. The tops of the standpipes are open to allow vapour flow down through the centre of the chimneys. Some designs use special vapour downcomer chimneys to handle the bulk of the vapour flow. This type is known from U.S. Patent No. 4,126,540 and U.S. Patent No. 3,353,924.

The fourth type of liquid distribution device is a bubble cap tray. This device uses a number of bubble caps laid out on a regular pitched pattern on a horizontal tray.

The bubble cap is a cap centred concentrically on a standpipe. The sides of the cap are slotted for vapour flow. Liquid flows under the cap and, together with the vapour, flows upward in the annular area and then down through the centre of the standpipe as described in U.S. Patent No. 5,158,714.

**SUMMARY OF THE INVENTION**

The device of the present invention is termed a "vapour lift distribution tray". It is horizontally supported in the vessel. The tray can be either a sectionalized or solid plate. Whether sectionalized or solid, all tray edges are gasketed or otherwise sealed to provide an essentially leak free surface.

The tray is perforated by evenly spaced holes across its surface. The holes may be round, square, rectangular or any other geometric shape. The holes are optimally spaced on either a square, triangular, radial or other symmetrical pattern. If the horizontal tray is sectionalized, the perforation holes may be located optimally on each tray section. In all cases, an optimized pattern is used to provide approximately even spacing between all perforations and to provide an approximately even ratio of perforation hole area to horizontal tray area across the entire horizontal tray.

Each perforation is fitted with a inverted "U"-shaped device termed a "vapour lift tube". The vapour lift tubes are attached to the tray in such a way as to be leak tight.

On the underside of the tray, a drip edge is established for each perforation. This is achieved by having the vapour lift tube extend through the tray, by having a separate piece attached to the tray, by having the tray extruded down, or by some other equivalent means.

The above and further embodiments of the invention are defined in the claims.

**BRIEF DESCRIPTION OF THE DRAWINGS**

Fig. 1 shows a first embodiment of the vapour lift tube of the present invention.
Fig. 2-5 shows alternative embodiments of the vapour lift tube of the present invention.

**DETAILED DESCRIPTION OF THE PREFERRED EMBODIMENT**

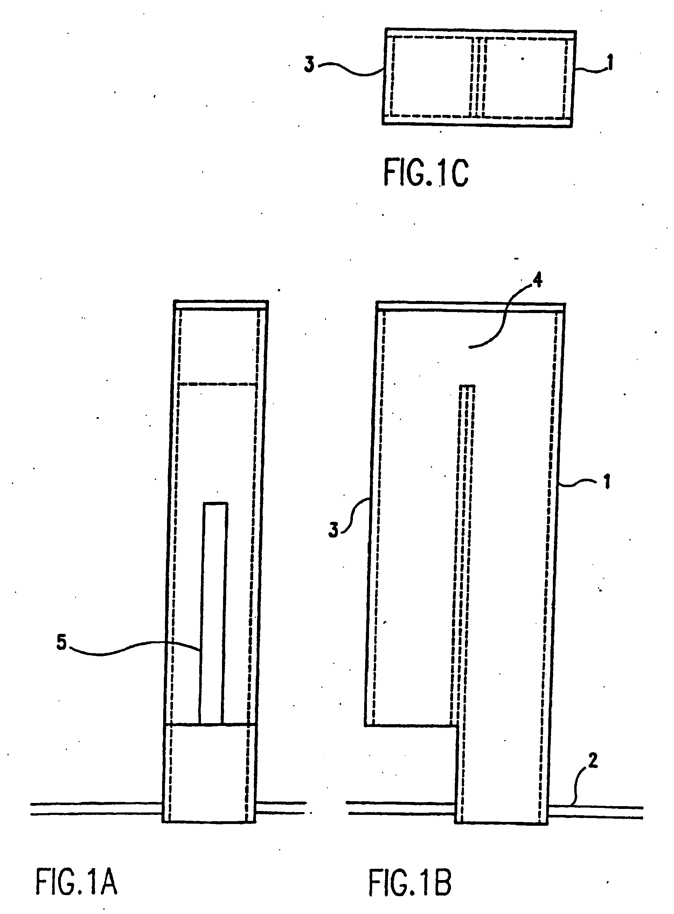

The vapour lift tube design concept is shown on Fig. 1. One leg (downflow tube 1) of the inverted "U" has opening 4 between the legs. The device provides thereby a flow path across the tray - inlet through the end of the short leg, vertical flow through the short leg, direction change at the top of the inverted "U", downflow through the long leg and discharge through the open end of the long leg below the tray.

A vertical slot 5 is cut into the side of the short leg opposite the longer leg. The top of the slot is at or below the bottom of the internal opening between legs. Alternatively, two or more slots could be cut into the short leg sides adjacent to or opposite the longer leg.

In operation, a liquid level will be established on the tray. The liquid level on the vapour lift tube will be above the bottom of the short leg but below the top of the slot in the short leg. Vapour will pass through the slot in the short leg creating a pressure drop between the inside and outside of the vapour lift tube. Due to the lower pressure inside the vapour lift tube, the liquid level will be higher inside than outside the vapour lift tube. The vapour and liquid will mix in the shorter leg with the vapour lifting the liquid to flow up and over the connecting wall between the shorter and longer legs. Liquid will partially disengage, while flowing over the connecting wall and down the longer leg. At the opening under the tray, the liquid and vapour will further disengage with the liquid draining off the drip edge.

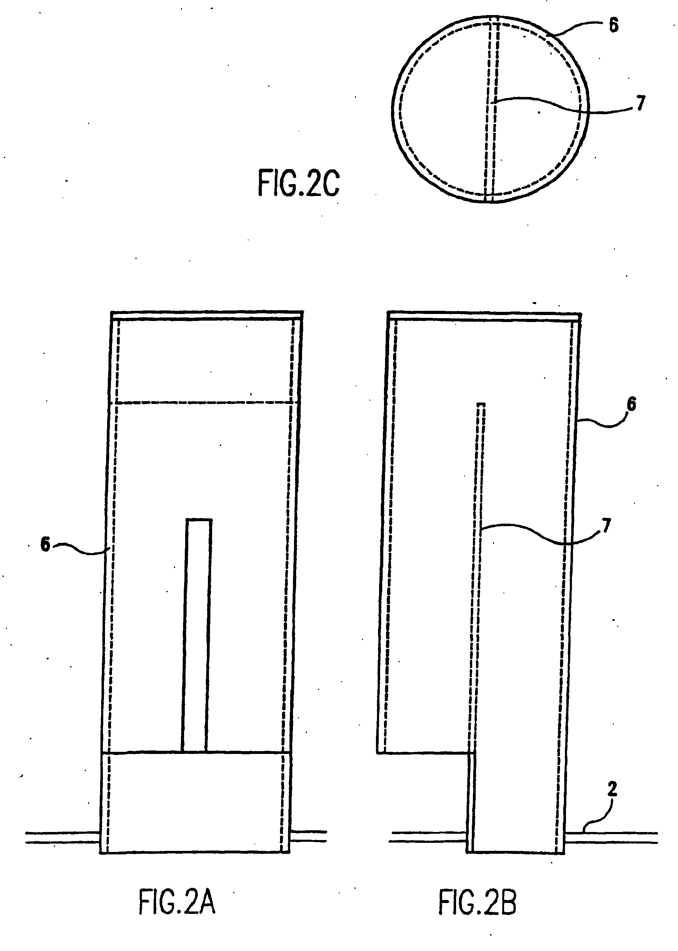

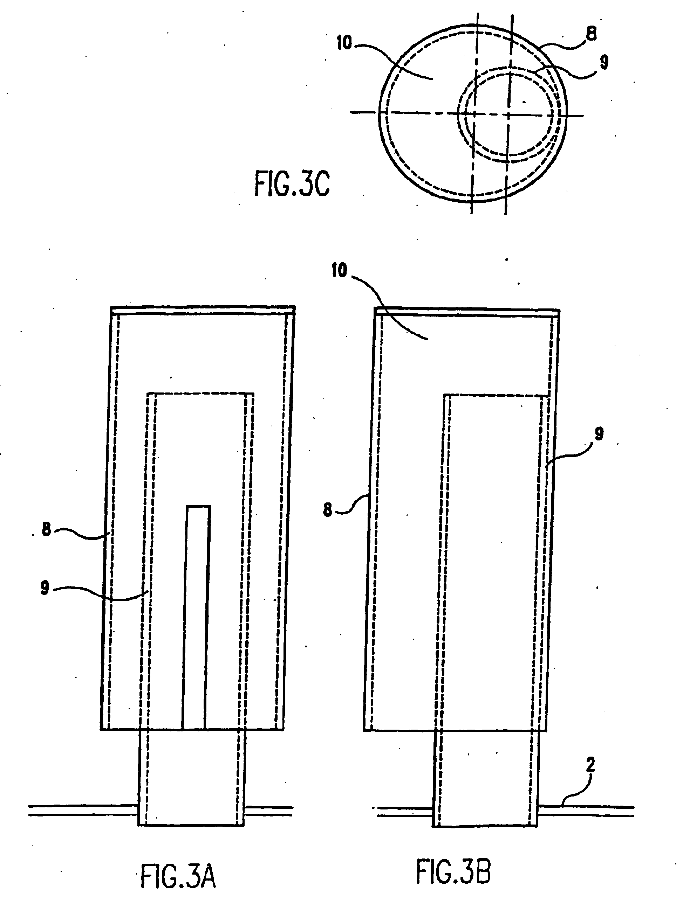

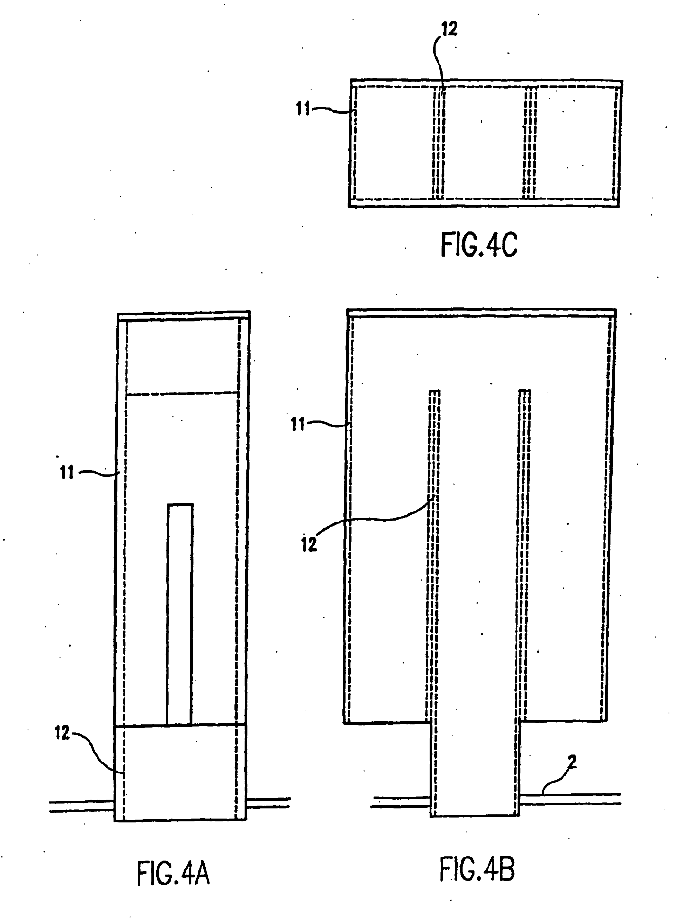

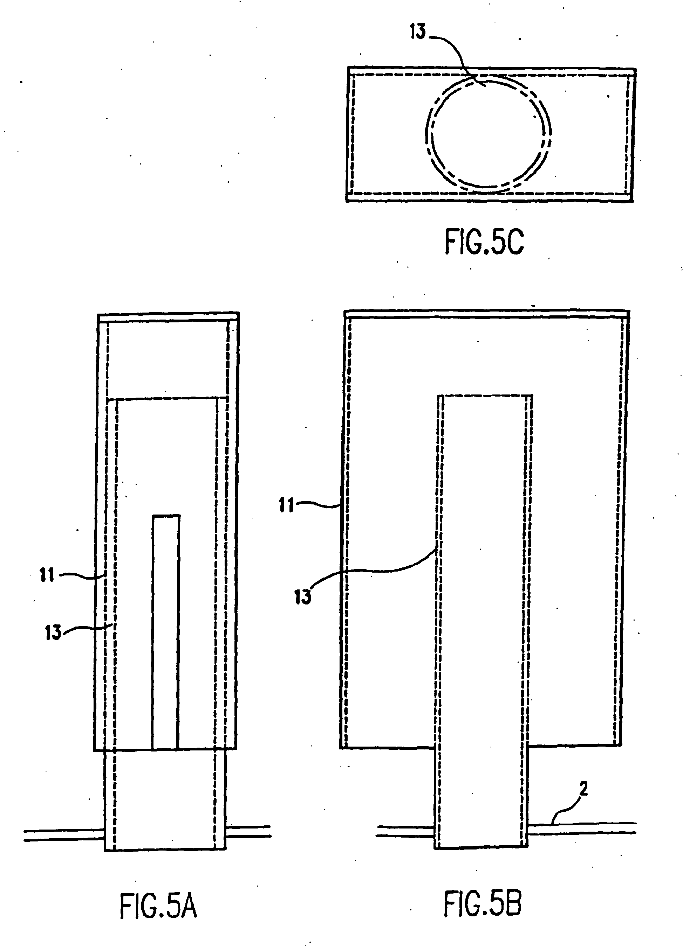

Alternative versions of the vapour lift tube design are shown on Fig. 2, 3, 4 and 5. In Fig. 1, the legs of the inverted "U" have square or rectangular cross sections. In Fig. 2, the device is composed of a single round tube 6 with a vertical baffle 7 to form the short and long legs. In Fig. 3, the device is composed of a pair of non-concentric round tubes, 8 and 9. The long leg is the smaller diameter tube 9 while the short leg is the annular space 10 inside the larger tube 8. In Fig. 4, an "**M**" shaped device is used with the outer legs being the equivalent of the short legs and the middle leg being the equivalent of the long leg. This version would be used where there is high liquid and vapour loadings. Fig. 5 is the same basic concept as Fig. 4 with the exception that the centre leg is a round tube. In all versions, the top has been illustrated as being a flat plate. The top could also be rounded, domed, peaked or any other geometry.

The preferred version of the vapour lift tube is the design shown in Fig. 5. This version can be designed to operate over a wide range of vapour-liquid loads, maintains the geometric relationships necessary for functionality and can be fabricated economically and efficiently.

The known trough type distribution device is mechanically complex and very sensitive to levelness. Depending on the design of the transitions between troughs, the quality of the distribution may also be susceptible to fouling.

The known perforated plate design is similar to the chimney design. The chimney design is preferred since it can be designed for a wider range of liquid/vapour loadings and is less susceptible to fouling.

The advantages of a vapour lift tube device according to the invention over a chimney type design is the significantly wider turndown range possible with the vapour lift tube. As the liquid flow decreases, a properly designed chimney must either become taller or have smaller holes drilled in the side. Due to fabricating tolerances, care of installation and deflection due to operating load, not all of the distribution devices will be at the same level in the vessel. At some level of turndown, some holes will be covered with liquid and others will not. This results in uneven liquid distribution over the surface below the tray. With proper design, the vapour lift tube device will reduce the liquid flow difference between vapour lift tubes at different elevations better than what can be achieved with a chimney type design. A further advantage of the vapour lift tube over the chimney type design is the increased contacting of the liquid and vapour phases. The intimate contacting that occurs in the upflow portion of the vapour lift tube provides closer approaches to thermal and compositional equilibrium than would be achieved in the chimney tray.

The vapour lift tube device is similar to the bubble cap device in concept but has several advantages. Since the vapour lift tube device is smaller, more can be placed on a distribution tray to achieve better distribution of liquid. Furthermore, since typical spacing patterns are square or triangular pitch, there are usually gaps in liquid distribution coverage near the vessel wall. With a smaller spacing, the size of these gaps are smaller. Overall wetting efficiency below the tray is better with a smaller pitch than with a larger pitch. The bubble cap design tray is limited to relatively large spacing and additional measures have been attempted to improve the liquid flow from the cap, e.g. the shear plate described in the Shih patent. Increasing the number of bubble caps with reduced spacing would increase the number of distribution points, but would negatively impact on the liquid/vapour flow relationships through each cap. Using more bubble caps would require making the bubble caps smaller with either smaller slots or fewer slots. Using smaller slots is not practical since there is a minimum slot size for fouling considerations. Using fewer slots is not desirable since that may lead to channelling of the vapour in the annulus and less efficient contacting with the liquid phase. A further advantage for the vapour lift tube device is that its simplicity makes it easier and less costly to fabricate in the optimal size proscribed by the process conditions.

In many processes where this tray will be used, e.g. hydroprocessing reactors, there can be wide variations in the vapour and liquid phase rates and physical properties over time and during turndown operations. Due to fabricating tolerances and the care of installation, there will be unavoidable variations in the distribution tray levelness. Liquids dropping onto the distribution tray from an inlet distributor or quench zone mixer may be unevenly distributed and could result in liquid height gradients across the tray due to splashing, waves or hydraulic head. An optimized liquid distributor design using the vapour lift tube concept is possible that will provide better liquid distribution below the tray than can be obtained from optimized designs of trough distributors, simple perforated plate distribution trays, chimney type distribution trays or concentric bubble cap distribution trays.

The liquid distribution trays of this invention will typically be used in hydroprocessing reactors. By obtaining even distribution of the liquid reactants over the entire reactor cross sectional area, all the catalyst at a given level is evenly wetted. Thus, all the catalysts at a given level operate at the same efficiency, which increases the overall efficiency of the reactor. Additionally, even liquid distribution maintains even radial temperature profiles across che reactor. This results in minimizing peak reactor temperatures which, over time reduces coking and catalyst deactivation rate. Consequently, the reactor operates more efficiently and with a longer cycle length. Value is achieved by reduced catalyst requirements, higher processing capability and/or longer cycle lengths. The device will work for any two phase downflow reactor or contactor. Typical applications would be in hydrotreating, hydrocracking, aromatic saturation, catalytic dewaxing and hydrofinishing reactors.

**Example**

The distribution performance of the vapour lift distributor has been tested against the traditional bubble cap (U.S. Patent No. 3,218,249, Example IV) at atmospheric pressure, ambient temperature and with water and air.

The bubble cap used in this test is shown in the above U.S. Patent. The dimensions were as follows: The riser was a steel tube having an outer diameter of 79 mm, wall thickness of 2.11 mm and a height of 180 mm. The cap was made of 111 mm inner diameter steel pipe with a wall thickness of 2.11 mm and height of 129 mm with the upper end closed by a flat steel plate. Spacers were provided in the annular space between riser and cap. Each cap was provided with seven equally spaced slots 6.4 mm wide and 64 mm high. The vertical height from top of the riser to the inner wall of the cap was 19 mm.

The vapour lift tube used in the test is shown in Fig. 4.

The test was conducted in a test rig with two identical distributors mounted on a tray plate. The two distributors were mounted 10 mm out off level. Water and air were fed to the tray at controlled rates. The water exiting each of the two distributors was collected simultaneously in two containers over a certain time period. The content of the containers was weighted in order to find the flow from the low distributor and the flow from the high distributor.

The sensitivity of liquid flow from a distributor towards tray levelling was defined as:

$$Sensitivity = 2 \times \frac{W^{low} - W^{high}}{W^{low} + W^{high}} \times 100\% \qquad (1)$$

where:

$W^{low}$ is the weight of the liquid collected from the low distributor.
$W^{high}$ is the weight of the liquid collected from the high distributor.

The water and air flow to the tray was varied in order to simulate the actual vapour/liquid load conditions in a hydroprocessing reactor. In a hydroprocessing reactor the vapour/liquid flow does vary from unit to unit depending upon the composition of the oil, treatgas rate and composition and operating pressure and temperature of the reactor. Three typical vapour/liquid load cases were simulated in the experiment: a high liquid load case, a medium liquid load case and a low liquid load case.

Also for a given reactor the vapour/liquid flow will be different for operation at low reactor temperature and fresh catalyst (Start of Run: SOR) than for operation with high reactor temperature and deactivated catalyst (End Of Run: EOR). This effect was also simulated in the test.

Both distributor types were tested at the water/air loads given in Table 1 below:

Table 1

| Test conditions | | | |
|---|---|---|---|
| | High Liquid Load | Medium Liquid Load | Low Liquid Load |
| $H_{dry}/H$ | 0.63 | 0.63 | 0.63 |
| $Q_a^{SOR}/Q_w^{SOR}$ | 32.1 | 91.7 | 183.5 |
| $Q_a^{EOR}/Q_w^{EOR}$ | 91.7 | 183.5 | 642.2 |
| $Q_a^{EOR}/Q_a^{SOR}$ | 1.30 | 1.34 | 1.30 |

where:

$H_{dry}$ is the average vertical height of the slots which is not covered by liquid, mm.

H is the total height of the slot, mm.

$Q_a^{SOR}$ is the volumetric air flow used in the experiment to simulate SOR reactor conditions, $m^3/hr$.

$Q_a^{EOR}$ is the volumetric air flow used in the experiment to simulate EOR reactor conditions, $m^3/hr$.

$Q_w^{SOR}$ is the volumetric water flow used in the experiment to simulate SOR reactor conditions, $m^3/hr$.

$Q_w^{EOR}$ is the volumetric water flow used in the experiment to simulate EOR reactor conditions, $m^3/hr$.

The measured distribution performance in terms of sensitivity of liquid flow towards 10 mm level change as defined by equation (1) is given in Table 2 for the traditional bubble cap and in Table 3 for the vapour lift distributor.

Table 2

| Results for the traditional bubble cap | | | |
|---|---|---|---|
| Sensitivity | High Liquid Load | Medium Liquid Load | Low Liquid Load |
| SOR | 19.3 | 5.6 | 23.1 |
| EOR | 8.1 | 10.0 | 15.7 |
| Average | 13.7 | 7.8 | 19.4 |

Table 3

| Results for the Vapour Lift Distributor | | | |
|---|---|---|---|
| Sensitivity | High Liquid Load | Medium Liquid Load | Low Liquid Load |
| SOR | 1.8 | 0.9 | 0.8 |
| EOR | 3.2 | 3.0 | 9.3 |
| Average | 2.5 | 2.0 | 5.1 |

As seen the vapour lift tubes have significant better distribution performance than the bubble cap distributor. On average the sensitivity of liquid flow towards level is about 4 times higher for the bubble cap distributor than it is for the vapour lift distributor.

**Claims**

1. A liquid-vapour distribution device for use in two-phase concurrent downflow vessels which liquid-vapour distribution device comprises:

   a level, horizontal tray fabricated and installed so as to be essentially leak free at the junctions of the tray and vessel wall;
   said horizontal tray being perforated with holes of equal size; and
   the holes being evenly spaced distributed over the surface of the horizontal tray, each perforation through the horizontal tray being fitted with a vapour lift tube, consisting of one or two elongated upflow legs and one elongated downflow leg creating one or two upflow zones, a transition zone and a downflow zone, each downflow leg having same geometric cross sectional shape as the holes and being attached to the horizontal tray by means to make a leak proof seal and the one or two upflow legs of the vapour lift tube have one of more vertical slots cut into its side;

   **characterised in that** the one or two upflow legs of the vapour lift tube are fitted along the downflow leg so that each up flow leg is non-concentric with respect to the downflow leg that the bottom of the upflow zone portion terminates above the level of the horizontal tray so that the liquid is not impeded from flowing into the lower portion of the upflow leg, that the vapour lift tube is an "M" or an inverted "U" shaped device, and that the slot height will end at or below the elevation of the top of the downflow leg.

2. The liquid-vapour distribution device of claim 1, wherein the downflow legs have the same height at all points on the horizontal tray.

3. The liquid-vapour distribution device of claim 1, wherein the total perforation hole area is between 4% and 33% of the horizontal tray surface area.

4. The liquid-vapour distribution device of claim 1, wherein the upflow cross section area to perimeter ratio is above 4 mm to reduce frictional pressure drop and wall effects.

**Patentansprüche**

1. Flüssigkeits-Dampf-Verteilungsvorrichtung zum Einsatz in Zweiphasen-Gleich-Abwärtsstrombehältern, wobei die Flüssigkeits-Dampf-Verteilungsvorrichtung umfasst:

eine ebene horizontale Wanne, die so hergestellt und installiert ist, dass sie an den Verbindungsstellen der Wanne und der Behälterwand im Wesentlichen lecksicher ist;
die horizontale Wanne mit Löchern gleicher Größe perforiert ist; und
die Löcher über die Oberfläche der horizontalen Wanne gleichmäßig beabstandet verteilt sind, wobei jede Perforation durch die horizontale Wanne mit einem Dampf-Steigrohr versehen ist, das aus einem oder zwei länglichen Aufwärtsstromschenkeln und einem länglichen Abwärtsstromschenkel besteht, die ein oder zwei Aufwärtsstromzonen, eine Übergangszone und eine Abwärtsstromzone bilden, wobei jeder Abwärtsstromschenkel die gleiche geometrische Querschnittsform hat wie die Löcher und an der horizontalen Wanne mit Mitteln angebracht ist, durch die eine lecksichere Dichtung erzeugt wird, und in die Seite des einen oder der zwei Aufwärtsstromschenkels des Dampf-Steigrohrs einer von mehreren vertikalen Schlitzen geschnitten ist; **dadurch gekennzeichnet, dass** der eine oder die zwei Aufwärtsstromschenkel des Dampf-Steigrohrs entlang des Abwärtsstromschenkels so angebracht ist/sind, dass jeder Aufwärtsstromschenkel nicht konzentrisch in Bezug auf den Abwärtsstromschenkel ist,
dass das untere Ende des Aufwärtsstrom-Zonenabschnitts oberhalb der Ebene der horizontalen Wanne endet, so dass die Flüssigkeit nicht daran gehindert wird, in den unteren Abschnitt des Aufwärtsstromschenkels zu fließen,
dass das Dampf-Steigrohr eine Vorrichtung in Form eines "M" oder eines umgekehrten "U" ist und
dass die Schlitzhöhe an oder unterhalb der Höhe des oberen Endes des Abwärtsstromschenkels endet.

2. Flüssigkeits-Dampf-Verteilungsvorrichtung nach Anspruch 1, wobei die Abwärtsstromschenkel an allen Punkten an der horizontalen Wanne die gleiche Höhe haben.

3. Flüssigkeits-Dampf-Verteilungsvorrichtung nach Anspruch 1, wobei die gesamte Perforationsloch-Fläche zwischen 4 % und 33 % der Fläche der horizontalen Wanne beträgt.

4. Flüssigkeits-Dampf-Verteilungsvorrichtung nach Anspruch 1, wobei das Verhältnis von Aufwärtsstrom-Querschnittsfläche zu Umfang über 4 mm liegt, um Reibungs-Druckgefälle und Wandeffekte zu verringern.

**Revendications**

1. Dispositif de distribution de liquide-vapeur destiné à être utilisé dans des récipients à deux phases concourantes à courant descendant, lequel dispositif de distribution de liquide-vapeur comprend :

un bac horizontal à niveau fabriqué et installé de manière à être essentiellement étanche aux connexions du bac et de la paroi de récipient ;
ledit bac horizontal étant perforé de trous de dimension égale ; et
les trous étant répartis de manière régulière sur la surface du bac horizontal, chaque perforation effectuée au travers du bac horizontal comportant un tube de montée de vapeur, se composant d'une ou de deux branches allongées à courant montant et d'une branche allongée à courant descendant créant une ou deux zones à courant montant, une zone de transition et une zone à courant descendant, chaque branche à courant descendant ayant en coupe transversale la même forme géométrique que les trous et étant fixée sur le bac horizontal à l'aide de moyens permettant une étanchéité aux fuites, et la branche ou les deux branches à courant montant du tube de montée de vapeur comprend ou comprennent une ou plusieurs fentes verticales découpées dans leurs côtés ;

**caractérisé en ce que** la ou les deux branches à courant montant du tube de montée de vapeur est ou sont montées le long de la branche à courant descendant de telle sorte que chaque branche à courant montant est non concentrique à la branche à courant descendant, que l'embase de la partie de zone à courant montant se termine au-dessus du niveau du bac horizontal de telle sorte que le liquide n'est pas empêché de s'écouler à l'intérieur de la partie inférieure de la branche à courant montant, que le tube de montée de vapeur est un dispositif en forme de « M » ou de « U » inversé, et que la hauteur de la fente se termine au niveau ou en dessous de l'élévation du sommet de la branche à courant descendant.

2. Dispositif de distribution de liquide-vapeur selon la revendication 1, dans lequel les branches à courant descendant ont la même hauteur en tous points sur le bac horizontal.

3. Dispositif de distribution de liquide-vapeur selon la revendication 1, dans lequel la surface totale de perforation par trous se situe entre 4% et 33% de la surface du bac horizontal.

4. Dispositif de distribution de liquide-vapeur selon la revendication 1, dans lequel le rapport entre la surface en coupe transversale à courant montant et le périmètre se situe au-dessus de 4mm afin de réduire la perte de charge par frottement et les effets de paroi.

FIG.1C

FIG.1A      FIG.1B

FIG.2C

FIG.2A

FIG.2B

FIG.3C

FIG.3A

FIG.3B

FIG.4C

FIG.4A

FIG.4B

FIG.5C

FIG.5A

FIG.5B

**EP 0 848 974 B2**

**REFERENCES CITED IN THE DESCRIPTION**

**Patent documents cited in the description**

- US 5192465 A
- US 4836989 A
- US 4126540 A
- US 3353924 A
- US 5158714 A
- US 3218249 A